# EUROPEAN PATENT APPLICATION

(11) **EP 2 428 625 A1**
(43) Date of publication of application: **14.03.2012**
(21) Application number: 10425295.2
(22) Date of filing: 10.09.2010
(51) Int. Cl.: E04B 7/12

(54) **Roof structure**

(71) Applicant: Profilia S.r.l., 70123 Bari (IT)
(72) Inventor: Carbonara, Sergio, 70123 Bari (IT)
(74) Representative: Bruni, Giovanni

(57) **Abstract**

Self-supporting roof structure comprising at least a laminate (2), supporting structures (4) of the laminate (2) characterized in that said laminate (2) has a nearly L-shaped profile where the supporting structures (4) are constrained to the ends.

## Description

Object of the present invention is a self-supporting roof structure apt to protect the underlying space with reduced production and installation costs.

Therefore, the present invention achieves the above described aims with a self-supporting roof structure with a nearly L-shaped profile.

Many similar products are known according to the state of the art. For example, in the patent application n° EP000000015213, it is described an arched roof structure made up of a plurality of modules connected between each other with restrained elements so that the structure becomes self-supporting. As a further example, in the patent application n° EP0070930 it is described a modular roof structure made up of a plurality of superimposed panels of plastic materials with airspace.

Said structures are usually planned to protect from bad weather, to isolate the covered space thermally, to provide a nice appearance; but when they are modified to accommodate other elements, such for example photovoltaic modules, they are realized in metallic structural work and are apt to accommodate the module as well as to orient the same in order to absorb the most solar radiance. The present invention solves the technical problem by realizing a self-supporting roof structure apt to receive charges, reducing the production and the installation costs, according to claims 1 to 7. These and other advantages will be highlighted in the detailed description of the invention, specifically referring to the drawings 1/2 and 2/2, which by way of example show a preferred, absolutely not limiting embodiment thereof.

In particular:
Figs. 1a and 1b show, respectively, two side views of the roof structure with corrugated sheet and the detail of the laminate in corrugated sheet on which the photovoltaic modules are arranged;
Fig. 2 shows the side view of the roof structure with insulated corrugated sheet;
Fig. 3 shows the side view of the roof structure with corrugated sheet with superimposed insulated panels and photovoltaic modules.

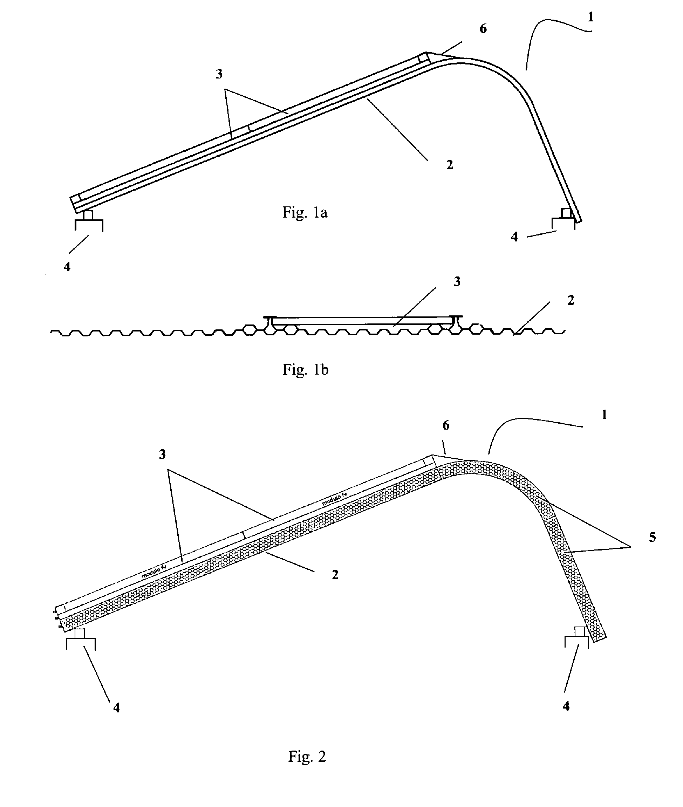

As shown in figs. 1 to 3, said roof structure, generally indicated with the reference number 1, is provided with at least a laminate 2, supporting structures 4 of the laminate 2.

Said laminate is particularly characterized by a nearly L-shaped profile, where the supporting structures 4 are constrained to the ends.

As shown in fig. 1, the roof structure is characterized by a laminate 2 comprising at least a profile in corrugated sheet with an union between the long side and the short side of the laminate. In particular, the photovoltaic modules are arranged on the long side of the laminate.

As shown in fig. 2, according to a second embodiment said roof structure is realized with a laminate 2 comprising two corrugated sheets with interposed insulating material 5 and an union radius between the two sides as well.

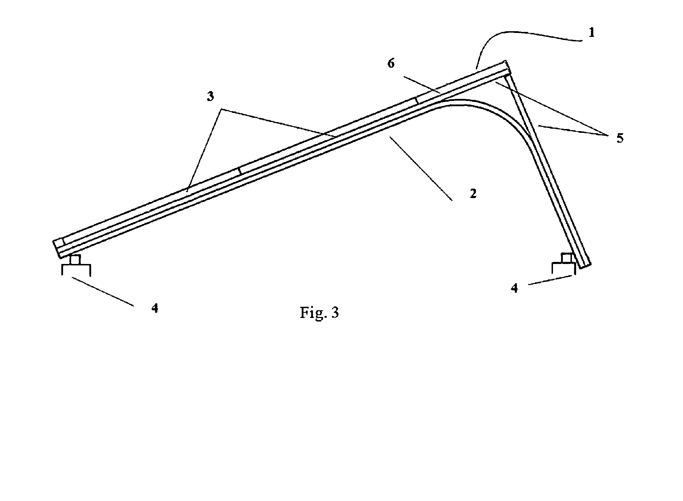

Finally, as shown in fig. 3, according to a third embodiment of the invention, the roof structure 1 is characterized by a laminate 2 comprising a profile in corrugated sheet with union between the two sides, on which there are superimposed linear insulating panels to form an L-shaped profile with sharp edge and photovoltaic modules on the long side.

Further, each embodiment comprises connection elements 6 apt to connect the profile of the photovoltaic module 3 with the laminate 2 so that the roof structure becomes an unique body.

The advantages of the roof structure are clear: easiness in installation and production and improvement of the cost-efficiency ratio in case of photovoltaic modules housing. Thanks to the inventive structure it is in fact possible to avoid using superstructures to receive the photovoltaic modules, so that the roof substitution is more advantageous instead of providing a superstructure on the existing roof.

## Claims

1. Self-supporting roof structure comprising at least a laminate (2) with respective supporting structures (4) and **characterized in that** said laminate (2) has a nearly L-shaped profile.

2. Roof structure according to claim 1, **characterized in that** the laminate comprises at least a corrugated sheet.

3. Roof structure according to claim 1, **characterized in that** the laminate comprises two sheet sections with interposed insulating material (5).

4. Roof structure according to any one of the preceding claims, **characterized in that** an union is provided between the long side and the short side of the laminate.

5. Roof structure according to any one of the preceding claims, **characterized in that** the photovoltaic modules are superimposed on the roof foil.

6. Roof structure according to any one of claims 1 to 4, **characterized in that** the laminate comprises a corrugated sheet with sharp edge, on which insulating panels and photovoltaic modules (3) are superimposed.

7. Roof structure according to any one of the preceding claims, **characterized in that** connection elements (6) connect the profile of the photovoltaic module with the laminate (2) so that the structure becomes an unique body.
